# EUROPÄISCHE PATENTSCHRIFT

(11) **EP 1 412 800 B1**
(45) Veröffentlichungstag und Bekanntmachung des Hinweises auf die Patenterteilung: **05.01.2005**
(21) Anmeldenummer: 02764706.4
(22) Anmeldetag: 17.07.2002
(51) Int. Cl.: G02B 23/24

(54) **STABLINSENSYSTEM FÜR STARRE ENDOSKOPE**
LINEAR LENS SYSTEM FOR RIGID ENDOSCOPES
SYSTEME DE LENTILLES EN BARRE POUR ENDOSCOPES RIGIDES

(30) Priorität: 28.07.2001 DE 10136956
(43) Veröffentlichungstag der Anmeldung: 28.04.2004
(73) Patentinhaber: Karl Storz GmbH & Co. KG, 78532 Tuttlingen (DE)
(72) Erfinder: LEI, Fang, 78591 Durchhausen (DE)
(74) Vertreter: Stamer, Harald, Dipl.-Phys.
(86) Internationale Anmeldenummer: PCT/EP2002/007914
(87) Internationale Veröffentlichungsnummer: WO 2003/012522

(56) Entgegenhaltungen:
- EP-A- 0 628 843
- DE-A- 2 814 236
- DE-A- 3 527 393
- PATENT ABSTRACTS OF JAPAN vol. 1995, no. 08, 29. September 1995 (1995-09-29) -& JP 07 134246 A (OLYMPUS OPTICAL CO LTD), 23. Mai 1995 (1995-05-23)

## Beschreibung

Die Erfindung betrifft ein Stablinsensystem für starre Endoskope zur Übertragung eines von einem Objektivlinsensystem erzeugten distalen Zwischenbildes in ein proximales Zwischenbild.

Starre Endoskope werden insbesondere in der Medizin oder der Technik zur Beobachtung in Hohlräumen, wie Körperhöhlen, Brennräumen von Motoren, Triebwerken u.ä. eingesetzt. Am distalen Ende ist ein Objektiv angeordnet, das ein erstes Zwischenbild erzeugt. Dieses Zwischenbild wird durch ein nachgeschaltetes Stablinsensystem in eine proximale Zwischenbildebene übertragen, in der es mit einem Okular oder einem Kamerasystem beobachtet werden kann. Je nach Tiefe der zu beobachtenden Hohlräume sind unterschiedliche Übertragungslängen durch das Stablinsensystem zu überbrücken.

Die auch als Relaislinsen bezeichneten Stablinsen erzeugen auf dem Übertragungsweg mehrfache Bildumkehrungen. Die an einer Bildumkehr beteiligten Stablinsenelemente werden dabei als Umkehrsystem bezeichnet. Üblicherweise wird eine ungerade Anzahl von im übrigen gleichen Umkehrsystemen vorgesehen. Aus Kostenund Fertigungsgründen sollen die Elemente der Umkehrsysteme möglichst einfach aufgebaut und zu einem großen Anteil gleich sein. Der Abbildungsmaßstab soll 1:1 betragen.

Jedes einzelne Umkehrsystem weist Abbildungsfehler auf, die sich im allgemeinen mit der Anzahl der Umkehrsysteme addieren. Zur Verringerung der Abbildungsfehler des gesamten Systems können in bekannter Weise komplexere, jeweils aus mehreren Linsengliedern zusammengesetzte Umkehrsysteme oder auch Linsenglieder mit variierendem Brechungsindex vorgesehen sein, wie z.B. in DE 36 25 023 A1 beschrieben. Verbleibende Abbildungsfehler werden üblicherweise durch eine entgegengesetzte Korrektion des Objektivs oder Okulars kompensiert.

Aus DE 38 54 156 T2 ist ein einmal verwendbares Endoskopsystem mit einer einfachen und preiswerten Konstruktion bekannt, bei dem die Objektiv-, Übertragungs- und Betrachtungslinsenanordnung aus einem Polymermaterial gefertigt sind. Das Übertragungssystem besteht ausschließlich aus einer Anzahl symmetrischer Paare von aneinander liegenden Stäbchenlinsen, die als identische Bikonvexlinsen mit brechenden Eingangs- und Ausgangsflächen mit gleicher Brennweite ausgebildet sind. Das Objektivlinsensystem erzeugt ein erstes Zwischenbild auf der distalen Eintrittsfläche des Übertragungssystems. Weitere Zwischenbilder entstehen als Umkehrbilder auf den Linsenflächen am Ende jedes Paares der Stäbchenlinsen. Auf eine Korrektur von Abbildungsfehlern, insbesondere des Farblängsfehlers wird aus Kostengründen bewußt verzichtet.

Aus US 5 933 275 ist ein Stablinsensystem bekannt, bei dem vom distalen Ende ausgehend eine Mehrzahl von Umkehrsystemen vorgesehen ist, die aus jeweils zwei einfachen, bikonvexen Stablinsen bestehen. Die Zwischenbilder entstehen zwischen den Umkehrsystemen im Luftraum. Alle Stablinsen sind durch einen deutlichen Luftabstand voneinander getrennt, wobei die Zwischenbilder aber doch relativ nahe zu den Glasflächen der Stablinsen liegen.

Am proximalen Ende sind zwei bikonvexe Stablinsen vorgesehen, auf deren einander zugekehrten Enden jeweils eine negative Meniskuslinse aufgekittet ist. Der Brechungsindex und die relative Dispersion der Meniskuslinse sollen größer sein als bei dem Stablinsenteil. Mit diesem aus Kittgliedern bestehenden proximalen Umkehrsystem sollen die von den vorgeschalteten einfachen Umkehrsystemen insgesamt erzeugten Farblängsfehler und sphärischen Aberrationen kompensiert werden. Um die sphärischen Aberrationen der einfachen Umkehrsysteme möglichst gering zu halten, sollen die Stablinsen aus einem Glas mit relativ hohem Brechungsindex und niedriger relativer Dispersion gefertigt sein.

Die von den einfachen Umkehrsystemen erzeugte Bildfeldwölbung und der Astigmatismus sollen durch eine entsprechende Überkorrektion des Objektivs kompensiert werden.

In einer weiteren Ausführungsform ist das proximale Umkehrsystem an den den Zwischenbildern zugewandten Enden jeweils zusätzlich mit einer negativen Meniskuslinse verkittet, die einen höheren Brechungsindex aufweist als der bikonvexe innere Stablinsenteil. Mit dem zusätzlichen Kittglied soll auch der von den einfachen Umkehrsystemen erzeugte Astigmatismus durch entsprechende Überkorrektion kompensiert werden.

Der Erfindung lag die Aufgabe zugrunde, bei vergleichbar einfachem Aufbau des Stablinsensystems die Korrektion der Abbildungsfehler, insbesondere des Farbfehlers, zu verbessern. Die Anpassung der Farbkorrektion an eine unterschiedliche Anzahl von Bildumkehrungen sollte in einfacher Weise möglich sein.

Diese Aufgabe wird bei einem Stablinsensystem der eingangs genannten Art erfindungsgemäß durch die kennzeichnenden Merkmale des Anspruchs 1 gelöst. Vorteilhafte Ausgestaltungen ergeben sich aus den Merkmalen der Unteransprüche.

Das wesentliche Merkmal des erfindungsgemäßen Stablinsensystems ist der insgesamt bezüglich einer Mittelebene symmetrische Aufbau, der sich bei der Bildkorrektion grundsätzlich wesentlich leichter und besser optimieren läßt als ein unsymmetrisches Gesamtsystem. Dabei sind das erste und letzte Umkehrsystem für sich unsymmetrisch und mit einer gekrümmten Kittfläche versehen. Mit diesen beiden Umkehrsystemen wird der Farbfehler des gesamten Bildübertragungssystems korrigiert. Die Aufgabe der Farbkorrektion wird dabei insbesondere durch die in Lichtrichtung erste bzw. letzte gekrümmte Kittfläche und durch unterschiedliche Gläser auf beiden Seiten der Kittfläche durchgeführt.

Der gekrümmten Kittfläche in Lichtrichtung benachbart kann in die Stablinse noch eine plane Kittfläche eingefügt sein, die eine die Abbildungsstrahlen begrenzende Blende tragen kann. Die Lage der planen Kittfläche ist so zu wählen, daß sie zur vorgenannten Mittelebene konjugiert ist, wodurch eine weitere Symmetrie im Gesamtaufbau erreicht wird.

Die weiteren Umkehrsysteme sind auch für sich symmetrisch und bestehen aus gleichen einfachen Stablinsen ohne irgendeine Kittfläche. Die Radien und die Länge der einfachen Stablinsen sind so ausgelegt, daß ein telezentrischer Strahlengang sowohl für die Zwischenbilder als auch für die Pupillen der Stablinsen erzielt wird und die sphärische Aberration und Coma korrigiert sind. Durch die symmetrische Konstruktion der Zwischenumkehrungen werden die Aberrationen, wie z.B. Verzeichnung und chromatische Queraberration, behoben. Eine verbleibende Bildfeldwölbung wird in üblicher Weise durch das Objektiv korrigiert.

Erfindungsgemäß wird bereits am Eingang in das Bildübertragungssystem ein Teil der Farbkorrektion durchgeführt, die dem von den nachfolgenden einfachen Stablinsen erzeugten Farbfehler entgegen gerichtet ist. Ein gleicher Teil wird dann erst am Ausgang des Bildübertragungssystems korrigiert. Beim Durchgang durch das Bildübertragungssystem sind die Zwischenabbildungen daher mit einem durchschnittlich kleineren Farbfehler behaftet, dessen Korrektur insgesamt somit ebenfalls symmetrisch zur Mittelebene des gesamten Bildübertragungssystems erfolgt.

Die Umkehrbilder liegen in Mittelebenen der einfachen Stablinsen und damit weit entfernt von Glas-/Luftflächen. Verschmutzungen auf solchen Flächen haben daher auf die Bildqualität nur einen sehr geringen Einfluß.

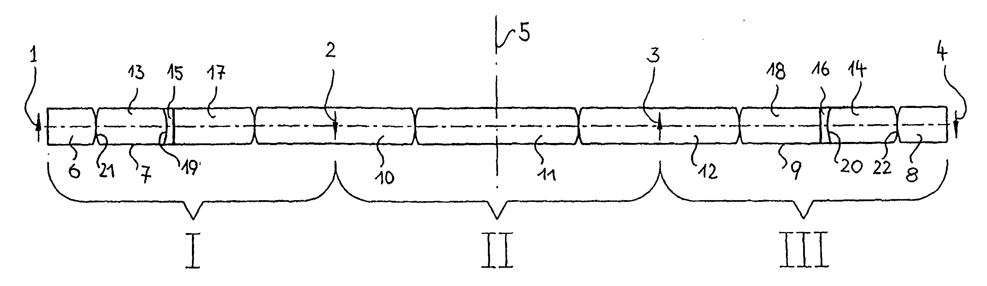

Ein Ausführungsbeispiel mit drei Bildumkehrungen ist in der Figur schematisch dargestellt.

Bei dem in der Figur dargestellten Stablinsensystem sind die einem Umkehrsystem zugehörigen Stablinsenelemente durch geschweifte Klammern I, II, III zusammengefaßt. Das Umkehrsystem I erzeugt von dem distalen Zwischenbild 1 innerhalb eines Stablinsenelements ein erstes Umkehrbild. Das zweite Umkehrsystem II erzeugt ebenfalls innerhalb eines Stablinsenelements ein weiteres Umkehrbild 3, das durch das Umkehrsystem III in die proximale Bildebene als umgekehrtes Zwischenbild 4 abgebildet wird. Mit einem nicht dargestellten Okular kann dann ein aufrechtes Bild des Beobachtungsobjekts beobachtet werden.

Das gesamte Stablinsensystem ist bezüglich einer Mittelebene 5 symmetrisch aufgebaut. Die ersten beiden Stablinsen 6, 7 sind für sich zwar unsymmetrisch, jedoch mit den am proximalen Ende angeordneten Stablinsen 8, 9 zur Mittelebene 5 spiegelsymmetrisch. Alle weiteren Stablinsen 10, 11, 12 sind zueinander gleich und ebenfalls symmetrisch zur Mittelebene 5 angeordnet. Aufgrund der vollständigen Symmetrie des Stablinsensystems zu der Mittelebene 5 wird bereits ein Teil der Aberrationen, wie z.B. die Verzeichnung und chromatische Queraberration, behoben. Die chromatische Längsaberration wird insbesondere durch die gekrümmte Kittfläche und die Glassorten der zum ersten bzw. letzten Umkehrsystem gehörenden Stablinsen 7, 9 kompensiert.

Die Stablinsen 7, 9 bestehen dazu jeweils aus einem bikonvexen Stablinsenglied 13, 14, einem konkav-planen Zwischenglied 15,16 und einem plan-konvexen Stablinsenglied 17, 18. Die Farbkorrektion wird insbesondere über den Radius 19, 20 der Kittfläche zwischen dem Stablinsenglied 13, 14 und dem Zwischenglied 15, 16 sowie durch Gläser mit unterschiedlicher relativer Teildispersion auf beiden Seiten der Kittfläche ausgeführt. Als vorteilhaft hat sich herausgestellt, wenn für das Stablinsenglied 13, 14 ein Glas mit kleiner Teildispersion und für das Zwischenglied 15, 16 ein Glas mit hoher Teildispersion gewählt wird. Über den Radius 21, 22 der Strahleneintritts- bzw. -austrittsfläche des Stablinsengliedes 13, 14 und dessen Brechungsindex kann der von der Anzahl der Bildumkehrungen abhängige Anteil der chromatischen Längsaberration zusätzlich berücksichtigt werden. Als vorteilhaft hat sich ein hoher Brechungsindex sowohl für das Stablinsenglied 13, 14 als auch das Zwischenglied 15, 16 erwiesen. Bei Stablinsensystemen mit unterschiedlicher Länge des Bildübertragungssystems braucht daher nur die Stablinse 7, 9 ausgewechselt zu werden.

In die plane Kittfläche der Stablinse 7, 9 kann z.B. durch Aufdampfen eine nicht dargestellte Blende eingefügt werden. Die Lage der Planfläche ist konjugiert zur Mittelebene 5. Anstelle der Kittfläche ist es dabei auch möglich, an dieser Stelle einen geringen Luftabstand vorzusehen, so daß eine separate mechanische Blende eingefügt werden kann.

Das Stablinsenglied 17, 18 kann mit Vorteil aus demselben Glas wie die nachfolgenden einfachen Stablinsen 10, 11, 12 gefertigt sein und denselben Radius auf der konvexen Seite aufweisen wie diese. Die Länge des Stablinsengliedes 17, 18 ergibt sich dann als halbe Länge der Stablinsen 10, 11, 12.

Die Stablinsen 10, 11, 12 sind untereinander gleich und jede für sich symmetrisch bikonvex. Es ist dabei aus der Figur ersichtlich, daß die vorstehend beschriebenen Abbildungs- und Korrektionsgrundsätze bereits bei Anordnung einer einzigen Stablinse 10 gegeben sind. Das proximale Zwischenbild 4 ist dabei dann aufrecht. Eine solche Abbildung ist für die Betrachtung mit einem Kamerasystem vorteilhaft. Wie in der Figur dargestellt und dazu beschrieben wurde, kann durch Hinzufügen von je zwei weiteren dieser Stablinsen eine Verlängerung des Bildübertragungssystems bei einer weiteren Bildumkehrung erreicht werden.

Die Radien und die Länge der Stablinsen 10, 11, 12 sind so auszulegen, daß der für das Bildübertragungssystem geforderte telezentrische Strahlengang sowohl für alle Zwischenbilder als auch Pupillen gegeben ist und der Öffnungsfehler und die Coma behoben sind. Für diese einfachen Stablinsen hat sich aufgrund des symmetrischen Systemaufbaus ein Glas mit relativ niedrigem . Brechungsindex und kleiner Teildispersion als günstig erwiesen.

Bei dem dargestellten Ausführungsbeispiel können die einzelnen Stablinsen nacheinander in ein nicht dargestelltes starres Endoskoprohr eingefüllt werden, da sie ohne Luftabstand aneinander liegen. Durch die Symmetrie des Aufbaus werden Montagefehler vermieden. Die große Anzahl identischer Stablinsenelemente erlaubt eine rationelle Fertigung und Lagerhaltung.

Die Konstruktionsdaten für ein bevorzugtes Ausführungsbeispiel mit sieben Umkehrungen sind in der nachfolgenden Tabelle angegeben. Abweichungen der Konstruktionsdaten im Rahmen üblicher Fertigungstoleranzen sind zulässig.

| Fläche Nr.i | Radius (mm) | Abstand (mm) | Brech.Index n | Abbe'sche Zahl ν |
|---|---|---|---|---|
| Zwischenb. | Plan | 3,4 | Luft | |
| 1 | Plan | 7,0 | 1,52 | 64,1 |
| 2 | -7,9 | 0 | Luft | |
| 3 | 8,4 | 10,0 | 1,74 | 44,7 |
| 4 | -1,2 | 1,0 | 1,78 | 26,1 |
| 5 | Plan | 0 | Luft | |
| 6 | Plan | 11,6 | 1,52 | 64,1 |
| 7 | -7,9 | 0 | Luft | |
| 8 | 7,9 | 23,2 | 1,52 | 64,1 |
| 9 | -7,9 | 0 | Luft | |
| 10 | 7,9 | 23,2 | 1,52 | 64,1 |
| 11 | -7,9 | 0 | Luft | |
| 12 | 7,9 | 23,2 | 1,52 | 64,1 |
| 13 | -7,9 | 0 | Luft | |
| 14 | 7,9 | 23,2 | 1,52 | 64,1 |
| 15 | -7,9 | 0 | Luft | |
| 16 | 7,9 | 23,2 | 1,52 | 64,1 |
| 17 | -7,9 | 0 | Luft | |
| 18 | 7,9 | 23,2 | 1,52 | 64,1 |
| 19 | -7,9 | 0 | Luft | |
| 20 | 7,9 | 23,2 | 1,52 | 64,1 |
| 21 | -7,9 | 0 | Luft | |
| 22 | 7,9 | 23,2 | 1,52 | 64,1 |
| 23 | -7,9 | 0 | Luft | |
| 24 | 7,9 | 23,2 | 1,52 | 64,1 |
| 25 | -7,9 | 0 | Luft | |
| 26 | 7,9 | 23,2 | 1,52 | 64,1 |
| 27 | -7,9 | 0 | Luft | |
| 28 | 7,9 | 23,2 | 1,52 | 64,1 |
| 29 | -7,9 | 0 | Luft | |
| 30 | 7,9 | 23,2 | 1,52 | 64,1 |
| 31 | Plan | 0 | Luft | |
| 32 | Plan | 1,0 | 1,78 | 26,1 |
| 33 | 1,2 | 10,0 | 1,74 | 44,7 |
| 34 | -8,4 | 0 | Luft | |
| 35 | 7,9 | 7,0 | 1,52 | 64,1 |
| 36 | Plan | 3,4 | Luft | |
| Zwischenb. | Plan | 0 | Luft | |

## Patentansprüche

1. Stablinsensystem für starre Endoskope zur Übertragung eines von einem Objektivlinsensystem erzeugten distalen Zwischenbildes (1) in ein proximales Zwischenbild (4), **gekennzeichnet**
**durch** eine erste unsymmetrisch aufgebaute Folge von zwei Stablinsen (6, 7),
eine anschließende ungeradzahlige Folge von gleichen, unverkitteten, symmetrisch bikonvexen Stablinsen (10, 11, 12), wobei innerhalb jeder ungeradzahligen der Stablinsen (10, 12) dieser Folge jeweils ein Umkehrbild (2, 3) des vorangegangenen Zwischenbildes entsteht, und
eine letzte Folge von zwei Stablinsen (8, 9), die zur ersten Folge (6, 7) spiegelsymmetrisch angeordnet ist.

2. Stablinsensystem nach Anspruch 1, wobei die erste (6, 7) und letzte Folge (8, 9) jeweils aus einer dem distalen (1) bzw. dem proximalen Zwischenbild (4) nahe benachbarten pfankonvexen Stablinse (6, 8) und einer zweifach verkitteten bikonvexen Stablinse (7, 9) bestehen.

3. Stablinsensystem nach Anspruch 2, die verkittete Stablinse (7, 9) aus einem bikonvexen Stablinsenglied (13, 14), einem konkav-planen Zwischenglied (15, 16) und einem plan-konvexen Stablinsenglied (17, 18) besteht.

4. Stablinsensystem nach Anspruch 3, wobei der Frontradius (21, 22) und der Radius (19, 20) der Kittfläche des bikonvexen Stablinsengliedes (13, 14) mit dem Zwischenglied (15, 16), sowie die Glasparameter dieser Linsenglieder (13, 14; 15, 16) so gewählt sind, daß nahezu alle Farbfehler des gesamten Bildübertragungssystems korrigiert sind.

5. Stablinsensystem nach Anspruch 4, wobei das Stablinsenglied (13, 14) aus einem Glas mit kleiner Teildispersion und das Zwischenglied (15, 16) aus einem Glas mit hoher Teildispersion besteht, wobei der Brechungsindex für beide Linsenglieder hoch ist.

6. Stablinsensystem nach Anspruch 3, wobei die plane Fläche innerhalb der Stablinse (7, 9) konjugiert zu einer Mittelebene (5) des Stablinsensystems angeordnet ist.

7. Stablinsensystem nach Anspruch 6, wobei in die plane Fläche eine Blende eingefügt ist.

8. Stablinsensystem nach einem der vorhergehenden Ansprüche, wobei die optischen Parameter der ersten Folge von Stablinsen (6, 7) zusammen mit denen der ersten Stablinse (10) aus der anschließenden Folge so gewählt sind, daß in der Mittelebene dieser Stablinse (10) ein erstes Umkehrbild (2) des distalen Zwischenbildes (1) entsteht.

9. Stablinsensystem nach Anspruch 1, wobei die ungeradzahlige Folge aus mindestens drei gleichen Stablinsen (10, 11, 12) besteht.

10. Stablinsensystem nach Anspruch 9, wobei die optischen Parameter der drei gleichen Stablinsen (10, 11, 12) so gewählt sind, daß in der Mittelebene der dritten Stablinse (12) ein weiteres Umkehrbild (3) entsteht.

11. Stablinsensystem nach Anspruch 10, wobei an die Folge der drei gleichen Stablinsen (10, 11, 12) eine oder mehrere Folgen von jeweils zwei gleichen Stablinsen angefügt ist.

12. Stablinsensystem nach einem der vorhergehenden Ansprüche, wobei die Radien und Längen der jeweils gleichen Stablinsen (10 11, 12) so gewählt sind, daß sowohl für die Zwischenbilder (1, 4) als auch für die Pupillen des Stablinsensystems ein telezentrischer Strahlengang entsteht.

13. Stablinsensystem nach Anspruch 12, wobei die Stablinsen (10, 11, 12) aus einem Glas mit relativ niedrigem Brechungsindex und kleiner Teildispersion bestehen.

14. Stablinsensystem nach einem der vorhergehenden Ansprüche mit sieben Umkehrungen und den nachstehend angegebenen Konstruktionsparametern:
| Fläche Nr.i | Radius (mm) | Abst. (mm) | Brech.Ind n | Abbe'sche Zahl ν |
|---|---|---|---|---|
| Zwischenb. | Plan | 3,4 | Luft | |
| 1 | Plan | 7,0 | 1,52 | 64,1 |
| 2 | -7,9 | 0 | Luft | |
| 3 | 8,4 | 10,0 | 1,74 | 44,7 |
| 4 | -1,2 | 1,0 | 1,78 | 26,1 |
| 5 | Plan | 0 | Luft | |
| 6 | Plan | 11,6 | 1,52 | 64,1 |
| 7 | -7,9 | 0 | Luft | |
| 8 | 7,9 | 23,2 | 1,52 | 64,1 |
| 9 | -7,9 | 0 | Luft | |
| 10 | 7,9 | 23,2 | 1,52 | 64,1 |
| 11 | -7,9 | 0 | Luft | |
| 12 | 7,9 | 23,2 | 1,52 | 64,1 |
| 13 | -7,9 | 0 | Luft | |
| 14 | 7,9 | 23,2 | 1,52 | 64,1 |
| 15 | -7,9 | 0 | Luft | |
| 16 | 7,9 | 23,2 | 1,52 | 64,1 |
| 17 | -7,9 | 0 | Luft | |
| 18 | 7,9 | 23,2 | 1,52 | 64,1 |
| 19 | -7,9 | 0 | Luft | |
| 20 | 7,9 | 23,2 | 1,52 | 64,1 |
| 21 | -7,9 | 0 | Luft | |
| 22 | 7,9 | 23,2 | 1,52 | 64,1 |
| 23 | -7,9 | 0 | Luft | |
| 24 | 7,9 | 23,2 | 1,52 | 64,1 |
| 25 | -7,9 | 0 | Luft | |
| 26 | 7,9 | 23,2 | 1,52 | 64,1 |
| 27 | -7,9 | 0 | Luft | |
| 28 | 7,9 | 23,2 | . 1,52 | 64,1 |
| 29 | -7,9 | 0 | Luft | |
| 30 | 7,9 | 23,2 | 1,52 | 64,1 |
| 31 | Plan | 0 | Luft | |
| 32 | Plan | 1,0 | 1,78 | 26,1 |
| 33 | 1,2 | 10,0 | 1,74 | 44,7 |
| 34 | -8,4 | 0 | Luft | |
| 35 | 7,9 | 7,0 | 1,52 | 64,1 |
| 36 | Plan | 3,4 | Luft | |
| Zwischenb. | Plan | 0 | Luft | |

## Claims

1. Linear lens system for rigid endoscopes to transmit a distal intermediate image (1) produced by an objective lens system into a proximal intermediate image (4), **characterized**
**by** a first asymmetrically constructed series of two linear lenses (6, 7),
a connecting odd-numbered series of identical, non-cemented, asymmetrically biconvex linear lenses (10, 11, 12), wherein an inverted image (2, 3) of the preceding intermediate image is formed inside each odd-numbered one of the linear lenses (10, 12) in this series, and
a last series of two linear lenses (8, 9), which is arranged mirror-symmetrically with respect to the first sequence (6, 7).

2. Linear lens system according to Claim 1, wherein the first (6, 7) series and the last series (8, 9) each consist of a planoconvex linear lens (6, 8), respectively next to the distal intermediate image (1) or the proximal intermediate image (4), and a doubly cemented biconvex linear lens (7, 9).

3. Linear lens system according to Claim 2, wherein the cemented linear lens (7, 9) consists of a biconvex linear lens component (13, 14), a planoconcave intermediate component (15, 16) and a planoconvex linear lens component (17, 18).

4. Linear lens system according to Claim 3, wherein the front radius (21, 22) and the radius (19, 20) of the cemented surface of the biconvex linear lens component (13, 14) with the intermediate component (15, 16), and the glass parameters of these lens components (13, 14; 15, 16) are selected so that virtually all chromatic aberrations of the overall image transmission system are corrected.

5. Linear lens system according to Claim 4, wherein the linear lens component (13, 14) consists of a glass with a low partial dispersion and the intermediate component (15, 16) consists of a glass with a high partial dispersion, the refractive index being high for both lens components.

6. Linear lens system according to Claim 3, wherein the plane surface inside the linear lens (7, 9) is arranged conjugate with a mid-plane (5) of the linear lens system.

7. Linear lens system according to Claim 6, wherein a diaphragm is fitted into the plane surface.

8. Linear lens system according to one of the preceding claims, wherein the optical parameters of the first series of linear lenses (6, 7), together with those of the first linear lens (10) in the connecting series, are selected so that a first inverted image (2) of the distal intermediate image (1) is formed in the mid-plane of this linear lens (10).

9. Linear lens system according to Claim 1, wherein the odd-numbered series consists of at least three identical linear lenses (10, 11, 12).

10. Linear lens system according to Claim 9, wherein the optical parameters of the three identical linear lenses (10, 11, 12) are selected so that another inverted image (3) is formed in the mid-plane of the third linear lens (12).

11. Linear lens system according to Claim 10, wherein the series of three identical linear lenses (10, 11, 12) is followed by one or more series, each of two identical linear lenses.

12. Linear lens system according to one of the preceding claims, wherein the radii and lengths of the respectively identical linear lenses (10 11, 12) are selected so that a telecentric optical path is formed both for the intermediate images (1, 4) and for the pupils of the linear lens system.

13. Linear lens system according to Claim 12, wherein the linear lenses (10, 11, 12) consist of a glass with a relatively low refractive index and a low partial dispersion.

14. Linear lens system according to one of the preceding claims, having inversions and the design parameters given below:
| Surface No i | Radius (mm) | Distance (mm) | Ref. Ind. n | Abbe number ν |
|---|---|---|---|---|
| Intern. Im. | plane | 3.4 | air | |
| 1 | plane | 7.0 | 1.52 | 64.1 |
| 2 | -7.9 | 0 | air | |
| 3 | 8.4 | 10.0 | 1.74 | 44.7 |
| 4 | -1.2 | 1.0 | 1.78 | 26.1 |
| 5 | plane | 0 | air | |
| 6 | plane | 11.6 | 1.52 | 64.1 |
| 7 | -7.9 | 0 | air | |
| 8 | 7.9 | 23.2 | 1.52 | 64.1 |
| 9 | -7.9 | 0 | air | |
| 10 | 7.9 | 23.2 | 1.52 | 64.1 |
| 11 | -7.9 | 0 | air | |
| 12 | 7.9 | 23.2 | 1.52 | 64.1 |
| 13 | -7.9 | 0 | air | |
| 14 | 7.9 | 23.2 | 1.52 | 64.1 |
| 15 | -7.9 | 0 | air | |
| 16 | 7.9 | 23.2 | 1.52 | 64.1 |
| 17 | -7.9 | 0 | air | |
| 18 | 7.9 | 23.2 | 1.52 | 64.1 |
| 19 | -7.9 | 0 | air | |
| 20 | 7.9 | 23.2 | 1.52 | 64.1 |
| 21 | -7.9 | 0 | air | |
| 22 | 7.9 | 23.2 | 1.52 | 64.1 |
| 23 | -7.9 | 0 | air | |
| 24 | 7.9 | 23.2 | 1.52 | 64.1 |
| 25 | -7.9 | 0 | air | |
| 26 | 7.9 | 23.2 | 1.52 | 64.1 |
| 27 | -7.9 | 0 | air | |
| 28 | 7.9 | 23.2 | 1.52 | 64.1 |
| 29 | -7.9 | 0 | air | |
| 30 | 7.9 | 23.2 | 1.52 | 64.1 |
| 31 | plane | 0 | air | |
| 32 | plane | 1.0 | 1.78 | 26.1 |
| 33 | 1.2 | 10.0 | 1.74 | 44.7 |
| 34 | -8.4 | 0 | air | |
| 35 | 7.9 | 7.0 | 1.52 | 64.1 |
| 36 | plane | 3.4 | air | |
| Interm. Im. | plane | 0 | air | |

## Revendications

1. Système de lentilles en barre pour endoscopes rigides pour le transfert d'une image intermédiaire distale (1) produite par un système de lentilles d'objectif en une image intermédiaire proximale (4), **caractérisé**
**par** une première séquence à structure asymétrique de deux lentilles en barre (6, 7),
une séquence suivante en nombre impair de lentilles en barre biconvexes symétriques (10, 11, 12) identiques non collées, dans laquelle apparaît, à l'intérieur de chaque lentille impaire (10, 12) des lentilles en barre, une image inversée (2, 3) de l'image intermédiaire précédente, et
une dernière séquence de deux lentilles en barre (8, 9), qui est disposée de façon symétrique par rapport à la première séquence (6, 7).

2. Système de lentilles en barre selon la revendication 1, dans lequel la première (6, 7) et la dernière (8, 9) séquences se composent chacune d'une lentille en barre plan-convexe (6, 8) placée à proximité de l'image intermédiaire distale (1) respectivement proximale (4), et d'une lentille en barre biconvexe (7, 9) doublement collée.

3. Système de lentilles en barre selon la revendication 2, dans lequel la lentille en barre collée (7, 9) se compose d'un élément de lentille en barre biconvexe (13, 14), d'un élément intermédiaire plan-concave (15, 16) et d'un élément de lentille en barre plan-convexe (17, 18).

4. Système de lentilles en barre selon la revendication 3, dans lequel le rayon de courbure frontal (21, 22) et le rayon de courbure (19, 20) de la face de collage de l'élément de lentille en barre biconvexe (13, 14) avec l'élément intermédiaire (15, 16), ainsi que les paramètres du verre de ces éléments de lentille (13, 14; 15, 16) sont choisis de telle façon que pratiquement toutes les aberrations chromatiques de l'ensemble du système de transfert d'image soient corrigées.

5. Système de lentilles en barre selon la revendication 4, dans lequel l'élément de lentille en barre (13, 14) se compose d'un verre à faible dispersion partielle et l'élément intermédiaire (15, 16) se compose d'un verre à haute dispersion partielle, l'indice de réfraction pour les deux éléments de lentille étant élevé.

6. Système de lentilles en barre selon la revendication 3, dans lequel la face plane à l'intérieur de la lentille en barre (7, 9) est disposée de façon conjuguée à un plan médian (5) du système de lentilles en barre.

7. Système de lentilles en barre selon la revendication 6, dans lequel un écran est introduit dans la face plane.

8. Système de lentilles en barre selon l'une quelconque des revendications précédentes, dans lequel les paramètres optiques de la première séquence de lentilles en barre (6, 7) combinés à ceux de la première lentille en barre (10) de la séquence suivante sont choisis de telle façon qu'il se forme dans le plan médian de cette lentille en barre (10) une première image inversée (2) de l'image intermédiaire distale (1).

9. Système de lentilles en barre selon la revendication 1, dans lequel la séquence en nombre impair se compose d'au moins trois lentilles en barre identiques (10, 11, 12).

10. Système de lentilles en barre selon la revendication 9, dans lequel les paramètres optiques des trois lentilles en barre identiques (10, 11, 12) sont choisis de telle façon qu'il se forme dans le plan médian de la troisième lentille en barre (12) une nouvelle image inversée (3).

11. Système de lentilles en barre selon la revendication 10, dans lequel une ou plusieurs séquences de chaque fois deux lentilles en barre identiques est/sont ajoutée(s) à la séquence des trois lentilles en barre identiques (10, 11, 12).

12. Système de lentilles en barre selon l'une quelconque des revendications précédentes, dans lequel les rayons de courbure et les longueurs des lentilles en barre respectivement identiques (10, 11, 12) sont choisis de telle façon qu'il s'établisse un trajet des rayons télécentrique aussi bien pour les images intermédiaires (1, 4) que pour les pupilles du système de lentilles en barre.

13. Système de lentilles en barre selon la revendication 12, dans lequel les lentilles en barre (10, 11, 12) se composent d'un verre présentant un indice de réfraction relativement bas et une faible dispersion partielle.

14. Système de lentilles en barre selon l'une quelconque des revendications précédentes avec sept inversions et les paramètres de construction indiqués ci-dessous:
| Face n° i | Rayon courb. (mm) | Distance (mm) | Ind. réfr. n | Nb. ν |
|---|---|---|---|---|
| Im.Inter. | plan | 3,4 | air | |
| 1 | plan | 7,0 | 1,52 | 64,1 |
| 2 | -7.9 | 0 | air | |
| 3 | 8,4 | 10,0 | 1,74 | 44,7 |
| 4 | -1,2 | 1,0 | 1,78 | 26,1 |
| 5 | plan | 0 | air | |
| 6 | plan | 11,6 | 1,52 | 64,1 |
| 7 | -7,9 | 0 | air | |
| 8 | 7,9 | 23,2 | 1,52 | 64,1 |
| 9 | -7,9 | 0 | air | |
| 10 | 7,9 | 23,2 | 1,52 | 64,1 |
| 11 | -7,9 | 0 | air | |
| 12 | 7,9 | 23,2 | 1,52 | 64,1 |
| 13 | -7,9 | 0 | air | |
| 14 | 7,9 | 23,2 | 1,52 | 64,1 |
| 15 | -7,9 | 0 | air | |
| 16 | 7,9 | 23,2 | 1,52 | 64,1 |
| 17 | -7, 9 | 0 | air | |
| 18 | 7,9 | 23,2 | 1,52 | 64,1 |
| 19 | -7,9 | 0 | air | |
| 20 | 7,9 | 23,2 | 1,52 | 64,1 |
| 21 | -7,9 | 0 | air | |
| 22 | 7,9 | 23,2 | 1,52 | 64,1 |
| 23 | -7,9 | 0 | air | |
| 24 | 7,9 | 23,2 | 1,52 | 64,1 |
| 25 | -7,9 | 0 | air | |
| 26 | 7,9 | 23,2 | 1,52 | 64,1 |
| 27 | -7,9 | 0 | air | |
| 28 | 7, 9 | 23,2 | 1, 52 | 64,1 |
| 29 | -7,9 | 0 | air | |
| 30 | 7,9 | 23,2 | 1,52 | 64,1 |
| 31 | plan | 0 | air | |
| 32 | plan | 1,0 | 1,78 | 26,1 |
| 33 | 1,2 | 10,0 | 1,74 | 44,7 |
| 34 | -8, 4 | 0 | air | |
| 35 | 7,9 | 7,0 | 1,52 | 64,1 |
| 36 | plan | 3,4 | air | |
| Im.inter. | plan | 0 | air | |
